# EUROPEAN PATENT SPECIFICATION

(11) **EP 2 765 639 B1**
(45) Date of publication and mention of the grant of the patent: **30.12.2015**
(21) Application number: 12838477.3
(22) Date of filing: 20.09.2012
(51) Int. Cl.: H01M 8/04, H01M 8/10

(54) **FUEL CELL SYSTEM**
BRENNSTOFFZELLENSYSTEM
SYSTÈME DE PILE À COMBUSTIBLE

(30) Priority: 04.10.2011 JP 2011219753
(43) Date of publication of application: 13.08.2014
(73) Proprietor: Nissan Motor Co., Ltd., Yokohama-shi, Kanagawa 221-0023 (JP)
(72) Inventor: NISHIMURA, Hidetaka, Kanagawa 243-0123 (JP)
(74) Representative: Grünecker Patent- und Rechtsanwälte PartG mbB
(86) International application number: PCT/JP2012/073982
(87) International publication number: WO 2013/051398

(56) References cited:
- WO-A1-2011/033879
- JP-A- 2008 097 966
- JP-A- 2008 176 975
- JP-A- 2009 026 525
- JP-A- 2010 129 354

## Description

### TECHNICAL FIELD

This invention relates to a fuel cell system.

### BACKGROUND ART

JP2007-242265A discloses a conventional fuel cell system in which the pressure of anode gas supplied when the fuel cell system is started is so set that inert gas filled in an anode gas flow passage of a fuel cell is fed under pressure to a buffer unit.

### SUMMARY OF INVENTION

However, in the above conventional fuel cell system, the pressure of the anode gas supplied when the fuel cell system is started is set without considering the temperature of the buffer unit. Thus, if there is a temperature difference between the fuel cell and the buffer unit, there has been a problem that the pressure of the anode gas is set higher than necessary, thereby deteriorating fuel economy.

The present invention was developed in view of such a problem and aims to suppress the deterioration of fuel economy by optimizing the pressure of anode gas supplied when a fuel cell system is started.

According to a certain aspect of the present invention, a fuel cell system for generating power by supplying anode gas and cathode gas to a fuel cell includes a control valve for controlling the pressure of the anode gas to be supplied to the fuel cell, a buffer unit for storing anode off-gas discharged from the fuel cell, and a start-up anode gas pressure control unit for feeding inert gas in an anode gas flow passage of the fuel cell under pressure to the buffer unit by controlling the pressure of the anode gas to be supplied to the fuel cell when the fuel cell system is started, and the start-up anode gas pressure control unit controls the pressure of the anode gas according to a temperature difference between the temperature of the fuel cell and that of the buffer unit.

Embodiments and advantages of the present invention are described in detail with reference to the accompanying drawings.

### BRIEF DESCRIPTION OF DRAWINGS

FIG. 1A is a view showing the configuration of a fuel cell according to a first embodiment of the present invention,
FIG. 1B is a view showing the configuration of a fuel cell according to the first embodiment of the present invention,
FIG. 2 is a schematic configuration diagram of an anode gas non-circulation type fuel cell system according to the first embodiment of the present invention,
FIG. 3 is a graph showing a pulsating operation during a steady operation in which an operating state of the fuel cell system is constant,
FIG. 4 is a flow chart showing a start-up control according to the first embodiment of the present invention,
FIG. 5 is a table for calculating a permeation coefficient of inert gas based on a stack temperature,
FIG. 6 is a graph showing a method for estimating a temperature difference between a second differential temperature and an outside air temperature,
FIG. 7 is a map for setting a start-up anode pressure based on a third differential temperature and an inert gas total permeation amount,
FIG. 8 is a schematic configuration diagram of an anode gas non-circulation type fuel cell system according to a second embodiment of the present invention, and
FIG. 9 is a flow chart showing a start-up control according to the second embodiment of the present invention.

### DESCRIPTION OF EMBODIMENTS

### (First Embodiment)

In a fuel cell, an electrolyte membrane is sandwiched between an anode electrode (fuel electrode) and a cathode electrode (oxidant electrode) and power is generated by supplying anode gas (fuel gas) containing hydrogen to the anode electrode and cathode gas (oxidant gas) containing oxygen to the cathode electrode. Electrode reactions which proceed in both the anode electrode and the cathode electrode are as follows.

Anode electrode: 2H₂→44H⁺+4e⁻ (1)

Cathode electrode: 4H⁺+4e⁻+O₂→2H₂O (2)

The fuel cell generates an electromotive force of about 1 V by these electrode reactions (1) and (2).

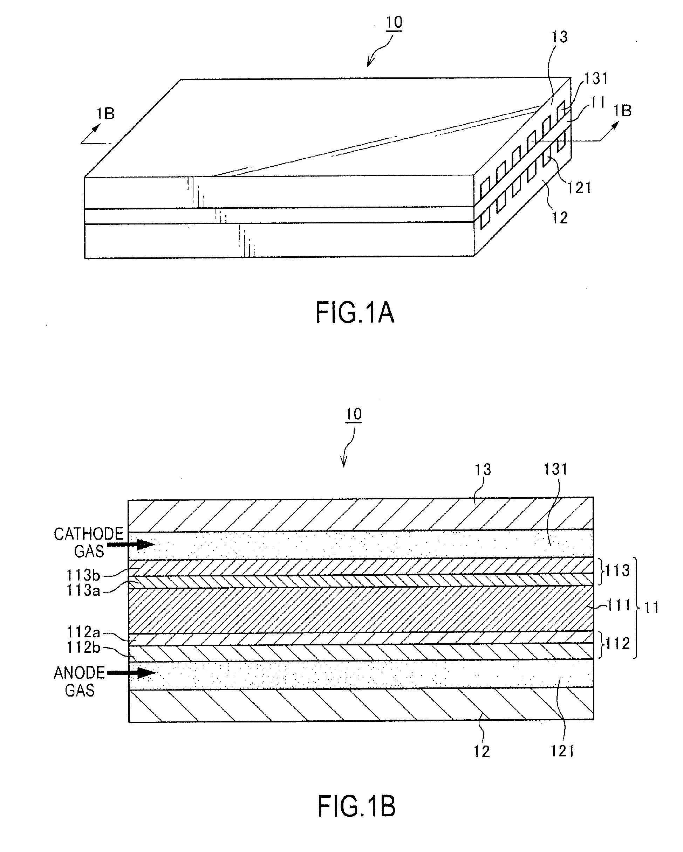

FIGS. 1A and 1B are views showing the configuration of a fuel cell 10 according to a first embodiment of the present invention. FIG. 1A is a schematic perspective view of the fuel cell 10. FIG. 1B is a sectional view along 1B-1B of the fuel cell 10 of FIG. 1A.

The fuel cell 10 is configured by arranging an anode separator 12 and a cathode separator 13 on both sides of a membrane electrode assembly (hereinafter, referred to as an "MEA") 11.

The MEA 11 includes an electrolyte membrane 111, an anode electrode 112 and a cathode electrode 113. The MEA 11 includes the anode electrode 112 on one surface of the electrolyte membrane 111 and the cathode electrode 113 on the other surface.

The electrolyte membrane 111 is a proton conductive ion exchange membrane formed of fluororesin. The electrolyte membrane 111 exhibits good electrical conductivity in a wet state.

The anode electrode 112 includes a catalyst layer 112a and a gas diffusion layer 112b. The catalyst layer 112a is in contact with the electrolyte membrane 111. The catalyst layer 112a is formed of platinum or carbon black particles carrying platinum or the like. The gas diffusion layer 112b is provided on the outer side (side opposite to the electrolyte membrane 111) of the catalyst layer 112a and in contact with the anode separator 12. The gas diffusion layer 112b is formed of a member having sufficient gas diffusion property and electrical conductivity, e.g. formed of carbon cloth woven of a thread made of carbon fiber.

Similarly to the anode electrode 112, the cathode electrode 113 includes a catalyst layer 113a and a gas diffusion layer 113b.

The anode separator 12 is in contact with the gas diffusion layer 112b. The anode separator 12 includes, on a side in contact with the gas diffusion layer 112b, a plurality of groove-like anode gas flow passages 121 for supplying anode gas to the anode electrode 112.

The cathode separator 13 is in contact with the gas diffusion layer 113b. The cathode separator 13 includes, on a side in contact with the gas diffusion layer 113b, a plurality of groove-like cathode gas flow passages 131 for supplying anode gas to the cathode electrode 113.

The anode gas flowing in the anode gas flow passages 121 and the cathode gas flowing in the cathode gas flow passages 131 flow in the same direction in parallel with each other. These gases may flow in opposite directions in parallel with each other.

In the case of using such a fuel cell 10 as a power source for an automotive vehicle, a fuel cell stack in which several hundreds of fuel cells 10 are laminated is used since required power is large. Power for driving the vehicle is taken out by configuring a fuel cell system for supplying anode gas and cathode gas to the fuel cell stack.

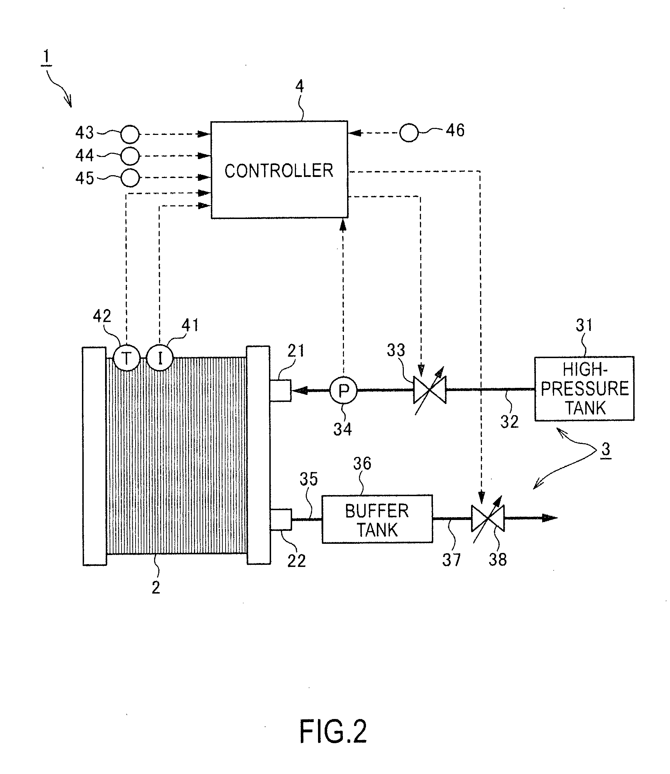

FIG. 2 is a schematic configuration diagram of an anode gas non-circulation type fuel cell system 1 according to the first embodiment of the present invention.

The fuel cell system 1 includes a fuel cell stack 2, an anode gas supplying device 3 and a controller 4.

The fuel cell stack 2 is formed by laminating a plurality of fuel cells 10 and generates power necessary to drive a vehicle (e.g. power necessary to drive a motor) upon receiving the supply of the anode gas and the cathode gas.

A cathode gas supplying/discharging device for supplying/discharging the cathode gas to the fuel cell stack 2 and a cooling device for cooling the fuel cell stack 2 are not shown to facilitate the understanding since they are not principal parts of the present invention. In the present embodiment, air is used as the cathode gas.

The anode gas supplying device 3 includes a high-pressure tank 31, an anode gas supply passage 32, a pressure regulating valve 33, a pressure sensor 34, an anode gas discharge passage 35, a buffer tank 36, a purge passage 37 and a purge valve 38.

The high-pressure tank 31 stores the anode gas to be supplied to the fuel cell stack 2 in a high pressure state.

The anode gas supply passage 32 is a passage for supplying the anode gas discharged from the high-pressure tank 31 to the fuel cell stack 2, one end is connected to the high-pressure tank 31 and the other end is connected to an anode gas inlet hole 21 of the fuel cell stack 2.

The pressure regulating valve 33 is provided in the anode gas supply passage 32. The pressure regulating valve 33 supplies the anode gas discharged from the high-pressure tank 31 to the fuel cell stack 2 while adjusting the anode gas to a desired pressure. The pressure regulating valve 33 is an electromagnetic valve capable of adjusting an opening continuously or stepwise, and the opening thereof is controlled by the controller 4.

The pressure sensor 34 is provided downstream of the pressure regulating valve 33 in the anode gas supply passage 32. The pressure sensor 34 detects a pressure in a part of the anode gas supply passage 32 downstream of the pressure regulating valve 33. In the present embodiment, the pressure detected by this pressure sensor 34 is used as the pressure of the entire anode system (hereinafter, referred to as an "anode pressure") including each anode gas flow passage 121 in the fuel cell stack and the buffer tank 36.

One end of the anode gas discharge passage 35 is connected to an anode gas outlet hole 22 of the fuel cell stack 2 and the other end is connected to an upper part of the buffer tank 36. Mixture gas of excess anode gas which is not used in electrode reactions and inert gas such as nitrogen and water vapor cross-leaked from the cathode side to the anode gas flow passages 121 (hereinafter, referred to as "anode off-gas") is discharged to the anode gas discharge passage 35.

The buffer tank 36 temporarily stores the anode off-gas having flowed through the anode gas discharge passage 35. A part of water vapor in the anode off-gas is condensed into liquid water and separated from the anode off-gas.

One end of the purge passage 37 is connected to a lower part of the buffer tank 36. The other end of the purge passage 37 is an opening end. The anode off-gas and liquid water stored in the buffer tank 36 are discharged to outside air from the opening end through the purge passage 37.

The purge valve 38 is provided in the purge passage 37. The purge valve 38 is an electromagnetic valve capable of adjusting an opening continuously or stepwise, and the opening thereof is controlled by the controller 4. By adjusting the opening of the purge valve 38, the amount of the anode off-gas discharged from the buffer tank 36 to the outside air via the purge passage 37 is adjusted, thereby adjusting an anode gas concentration in the anode system to a specified concentration. If a set value of the specified concentration is too small, the anode gas used for the electrode reactions becomes insufficient, therefore power generation efficiency decreases. On the other hand, if the set value of the specified concentration is too large, the amount of the anode gas discharged to the outside air together with the inert gas in the anode off-gas via the purge passage 37 increases, therefore fuel economy is deteriorated. Accordingly, the specified concentration is set at a suitable value in consideration of power generation efficiency and fuel economy. If an operating state of the fuel cell system 1 is the same, the concentration of the inert gas in the buffer tank 36 decreases and the anode gas concentration increases as the opening of the purge valve 38 is increased.

The controller 4 is configured by a microcomputer including a central processing unit (CPU), a read only memory (ROM), a random access memory (RAM) and an input/output interface (I/O interface).

To the controller 4 are input signals from various sensors such as a current sensor 41 for detecting an output current of the fuel cell stack 2, a water temperature sensor 42 for detecting the temperature of cooling water for cooling the fuel cell stack 2 (hereinafter, referred to as a "stack temperature"), an accelerator stroke sensor 43 for detecting a depressed amount of an accelerator pedal (hereinafter, referred to as "accelerator operation amount"), a vehicle speed sensor 44 for detecting a vehicle speed, an outside air temperature sensor 45 for detecting an outside air temperature and an SOC sensor 46 for detecting a battery charging rate in addition to the aforementioned pressure sensor 34.

The controller 4 executes an idle stop control based on input signals from the various sensors. The idle stop control is a control of stopping the power generation of the fuel cell stack 2 if predetermined idle stop conditions hold and, then, starting the power generation of the fuel cell stack 2 if a predetermined idle stop release condition holds such as when a vehicle stops at a red light.

Further, the controller 4 performs a pulsating operation of periodically increasing and decreasing an anode pressure by periodically opening and closing the pressure regulating valve 33 based on the input signals from the various sensors, and keeping the anode gas concentration in the anode system at the specified concentration by adjusting the opening of the purge valve 38 to adjust a flow rate of the anode off-gas discharged from the buffer tank 36.

In the case of the anode gas non-circulation type fuel cell system 1, if the anode gas continues to be supplied from the high-pressure tank 31 to the fuel cell stack 2 with the pressure regulating valve 33 kept open, the anode off-gas including unused anode gas discharged from the fuel cell stack 2 continues to be discharged from the buffer tank 36 to the outside air via the purge passage 37, which is wasteful.

Accordingly, in the present embodiment, the pulsating operation of periodically increasing and decreasing the anode pressure is performed by periodically opening and closing the pressure regulating valve 33. By performing the pulsating operation, the anode off-gas stored in the buffer tank 36 can be reversely flowed to the fuel cell stack 2 when the anode pressure is decreased. Since this enables the reuse of the anode gas in the anode off-gas, the amount of the anode gas discharged to the outside air can be decreased and the waste of the anode gas can be eliminated.

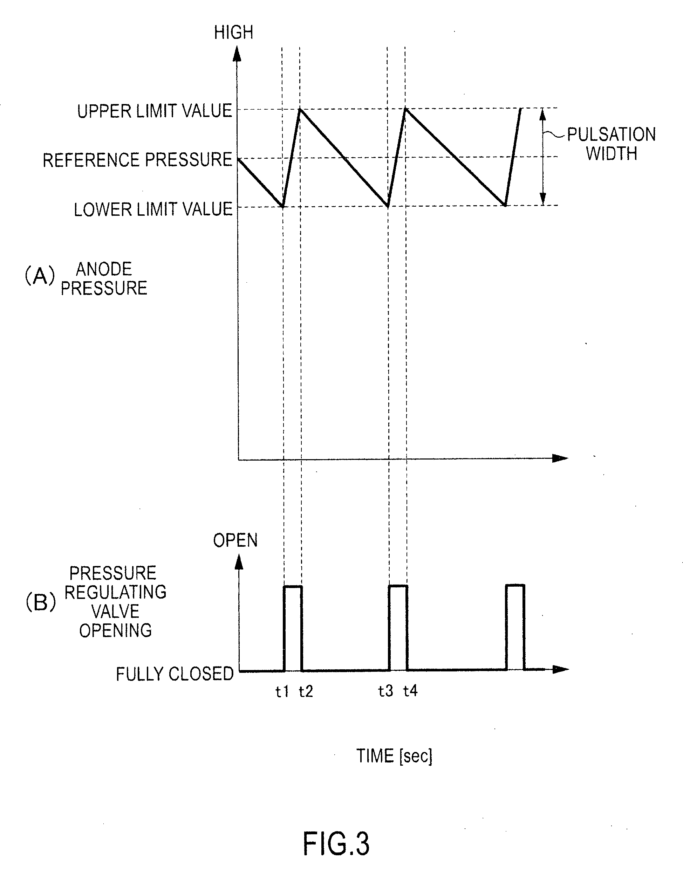

The pulsating operation is described below with reference to FIG. 3.

FIG. 3 is a graph showing a pulsating operation during a steady operation in which an operating state of the fuel cell system 1 is constant.

As shown in FIG. 3(A), the controller 4 calculates a reference pressure of the anode pressure and a pulsation width based on a load applied to the fuel cell stack 2 (hereinafter, referred to as a "stack load") (output current) and sets an upper limit value and a lower limit value of the anode pressure. Then, the controller 4 periodically increases and decreases the anode pressure within the range of the pulsation width with the reference pressure as a center, thereby periodically increasing and decreasing the anode pressure between the set upper and lower limit values of the anode pressure.

Specifically, when the anode pressure reaches the lower limit value at time t1, the pressure regulating valve 33 is opened at least up to such an opening that the anode pressure can be increased to the upper limit value as shown in FIG. 3(B). When in this state, the anode gas is supplied from the high-pressure tank 31 to the fuel cell stack 2 and discharged to the buffer tank 36.

When the anode pressure reaches the upper limit value at time t2, the pressure regulating valve 33 is fully closed as shown in FIG. 3(B) and the supply of the anode gas from the high-pressure tank 31 to the fuel cell stack 2 is stopped. Then, by the aforementioned electrode reaction (1), the anode gas remaining in the anode gas flow passages 121 in the fuel cell stack 2 is consumed with the passage of time. Thus, the anode pressure is reduced by as much as the anode gas is consumed.

Further, if the anode gas remaining in the anode gas flow passages 121 is consumed, the pressure of the buffer tank 36 temporarily becomes higher than those of the anode gas flow passages 121. Thus, the anode off-gas reversely flows from the buffer tank 36 to the anode gas flow passages 121. As a result, the anode gas remaining in the anode gas flow passages 121 and that in the anode off-gas reversely flowed to the anode gas flow passages 121 are consumed with the passage of time and the anode pressure further decreases.

When the anode pressure reaches the lower limit value at time t3, the pressure regulating valve 33 is opened as at time t1. When the anode pressure reaches the upper limit value again at time t4, the pressure regulating valve 33 is closed.

Here, when the fuel cell system 1 is operated, the reference pressure and pulsation width of the anode pressure are set according to an operating state of the fuel cell system 1 and the opening of the purge valve 38 is controlled so that the anode gas concentration of the entire anode system reaches the predetermined specified concentration as described above.

However, when the fuel cell system 1 is stopped, the inert gas such as nitrogen mainly permeates from the cathode side to the anode gas flow passages 121 and is gradually filled into the anode gas flow passages 121. Thus, when the fuel cell system 1 is stopped, the anode gas concentration gradually decreases from the specified concentration.

Accordingly, when the fuel cell system 1 is started, the anode gas concentration in the anode gas flow passages 121 needs to be increased to the specified concentration by feeding the inert gas filled in the anode gas flow passages 121 under pressure to the buffer tank 36. That is, when the fuel cell system 1 is started, the anode pressure needs to be set according to the amount of the inert gas having permeated from the cathode side to the anode gas flow passages 121 while the fuel cell system 1 was stopped, and an upper limit value of the anode pressure at the start-up (hereinafter, referred to as a "start-up anode pressure") needs to be higher than the pressure of the buffer tank 36 after the entire inert gas filled in the anode gas flow passages 121 is fed under pressure to the buffer tank 36.

At this time, the pressure of the buffer tank 36 after the same amount of the inert gas is fed under pressure to the buffer tank 36 is lower when an internal temperature of the buffer tank 36 (hereinafter, referred to as a "buffer temperature") is lower than the stack temperature than when the stack temperature and the buffer temperature are equal. Thus, if the buffer temperature is lower than the stack temperature, the anode gas is supplied more than necessary to feed the inert gas filled in the anode gas flow passages 121 under pressure to the buffer tank 36 and fuel economy is deteriorated unless the start-up anode pressure is set lower than that when the stack temperature and the buffer temperature are equal.

Conventionally, the start-up anode pressure has been set on the premise that the stack temperature and the buffer temperature are equal, i.e. the fuel cell system 1 is started after a long time elapses after the stop of the fuel cell system 1 and the stack temperature and the buffer temperature become equivalent to the outside air temperature. Thus, it has not been necessary to adjust the start-up anode pressure according to the buffer temperature.

However, in the case of the fuel cell system 1 for executing the idle stop control as in the present embodiment, the fuel cell system 1 is restarted in a short time after the stop of the fuel cell system 1. Then, the temperature of the buffer tank 36 having a smaller heat capacity decreases at a faster rate than that of the fuel cell stack 2, therefore the buffer temperature may become lower than the stack temperature.

Accordingly, in the present embodiment, the start-up anode pressure is controlled according to a temperature difference between the stack temperature and the buffer temperature when the idle stop control is executed. A start-up control according to this embodiment is described below.

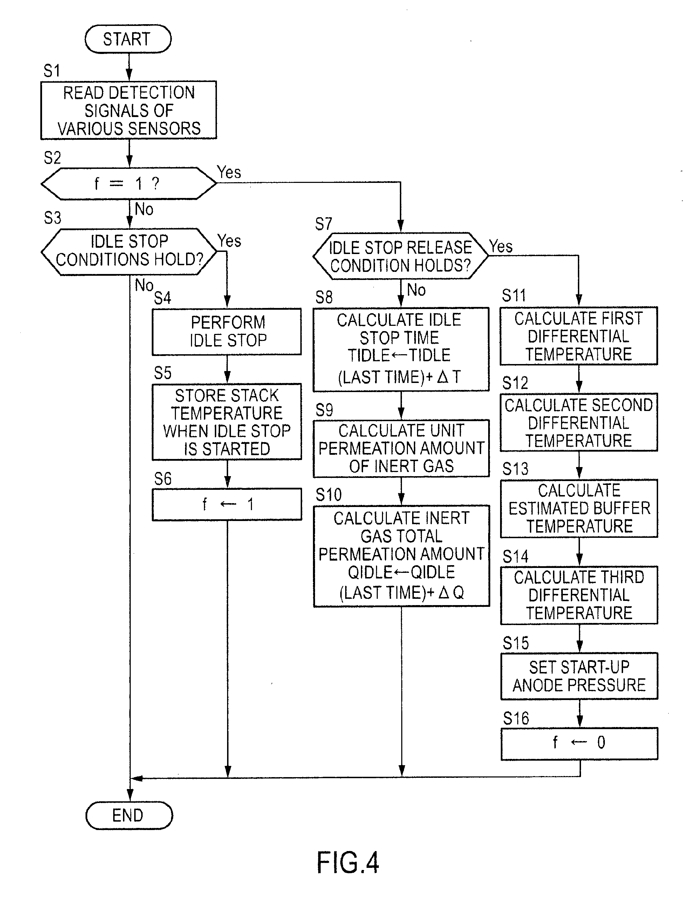

FIG. 4 is a flow chart showing the start-up control according to the present embodiment. The controller 4 performs this routine in a predetermined operation cycle (e.g. 10 [ms]) during the operation of the fuel cell system 1.

In Step S1, the controller 4 reads detection signals of the various sensors.

In Step S2, the controller 4 determines whether or not an idle stop flag f is set at 1. The idle stop flag f is a flag which is set to 1 when idle stop conditions hold and an initial value is set at 0. The controller 4 performs a processing of Step S3 if the idle stop flag f is set at 0 while performing a processing of Step S7 if the idle stop flag f is set at 1.

In Step S3, the controller 4 determines whether or not all of a plurality of idle stop conditions hold. The idle stop conditions include a vehicle speed lower than a predetermined vehicle speed, a battery charging rate higher than a predetermined charging rate and the end of a warm-up control. The controller 4 performs a processing of Step S4 if all of the plurality of idle stop conditions hold while finishing the process this time unless otherwise.

In Step S4, the controller 4 performs an idle stop. Specifically, the power generation of the fuel cell stack 2 is stopped by fully closing the pressure regulating valve 33 and stopping the supply of the cathode gas.

In Step S5, the controller 4 stores a stack temperature when the idle stop conditions hold (hereinafter, referred to as an "idle stop starting stack temperature").

In Step S6, the controller 4 sets the idle stop flag f to 1.

In Step S7, the controller 4 determines whether or not an idle stop release condition holds. The controller 4 determines that the idle stop release condition holds when at least one of the aforementioned plurality of idle stop conditions no longer holds. The controller 4 performs a processing of Step S8 unless the idle stop release condition holds while performing a processing of Step S11 if this condition holds.

In Step S8, the controller 4 calculates an elapsed time (hereinafter, "idle stop time") Tidle after the idle stop conditions hold. Specifically, the idle stop time Tidle is calculated by adding an operation cycle ΔT to the last value of the idle stop time Tidle. An initial value of the idle stop time Tidle is set at 0.

In Step S9, the controller 4 calculates a permeation amount per operation cycle (hereinafter, referred to as a "unit permeation amount") ΔQ of the inert gas having permeated from the cathode side to the anode gas flow passages 121.

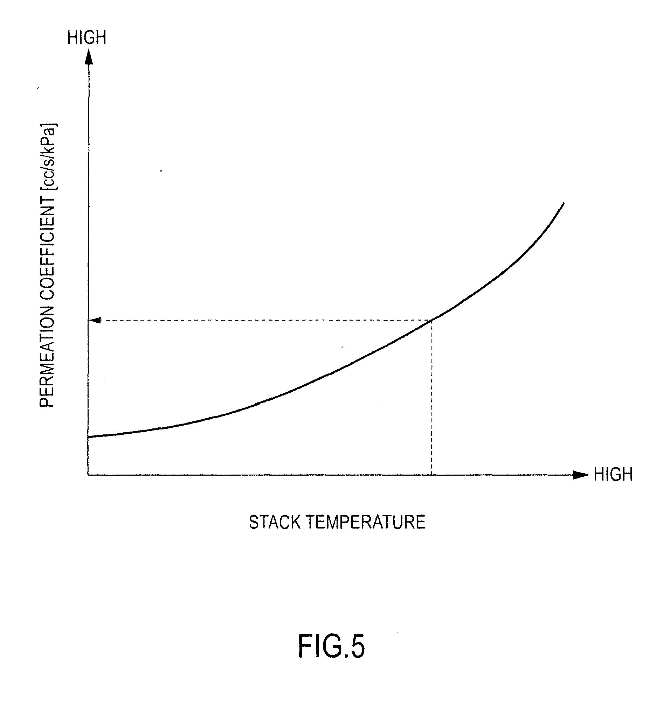

Specifically, first, a partial pressure initial value of the inert gas on the anode side is set at 0 [kPa] and a partial pressure difference from a partial pressure (e.g. 76 [kPa]) of the inert gas in the cathode gas on the cathode side is calculated. Subsequently, a permeation coefficient of the inert gas is calculated based on the stack temperature with reference to a table of FIG. 5 to be described later. Finally, the unit permeation amount ΔQ of the inert gas is calculated by multiplying the calculated partial pressure difference by the permeation coefficient.

It should be noted that although the partial pressure initial value of the inert gas on the anode side is set at 0 [kPa] in the first operation, a partial pressure of the inert gas on the anode side calculated based on an inert gas total permeation amount Qidle to be described later is set as a partial pressure initial value in the second and subsequent operations.

In Step S10, the controller 4 calculates the total permeation amount Qidle of the inert gas having permeated to the anode gas flow passages 121 during the idle stop time. Specifically, the inert gas total permeation amount Qidle is calculated by adding the unit permeation amount ΔQ to the last value of the inert gas total permeation amount Qidle.

In Step S11, the controller 4 calculates a temperature difference between the idle stop starting stack temperature and the current outside air temperature detected by the outside air temperature sensor 45 (hereinafter, referred to as a "first differential temperature"). Since the buffer temperature when the idle stop conditions hold can be basically thought to be equal to the stack temperature, the first differential temperature is, in other words, a differential temperature between the buffer temperature and the outside air temperature when the idle stop is started.

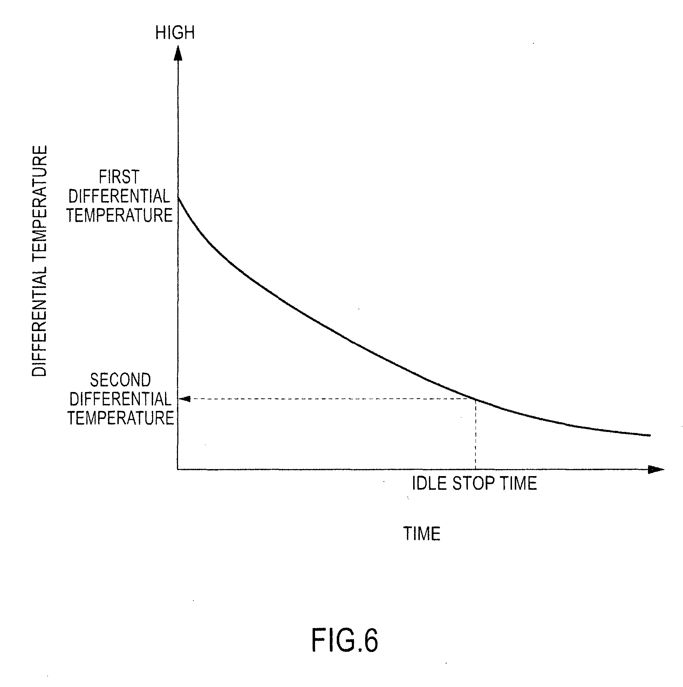

In Step S12, the controller 4 estimates a temperature difference between the buffer temperature after the elapse of the idle stop time and the current outside air temperature detected by the outside air temperature sensor 45 (hereinafter, referred to as a "second differential temperature") based on the first differential temperature and the idle stop time. A method for estimating the second differential temperature is described later with reference to FIG. 6.

In Step S 13, the controller 4 estimates the current buffer temperature by adding the second differential temperature to the current outside air temperature detected by the outside air temperature sensor 45. Hereinafter, this estimated current buffer temperature is referred to as an "estimated buffer temperature".

In Step S14, the controller 4 calculates a temperature difference between the current stack temperature detected by the water temperature sensor 42 and the estimated buffer temperature (hereinafter, referred to as a "third differential temperature").

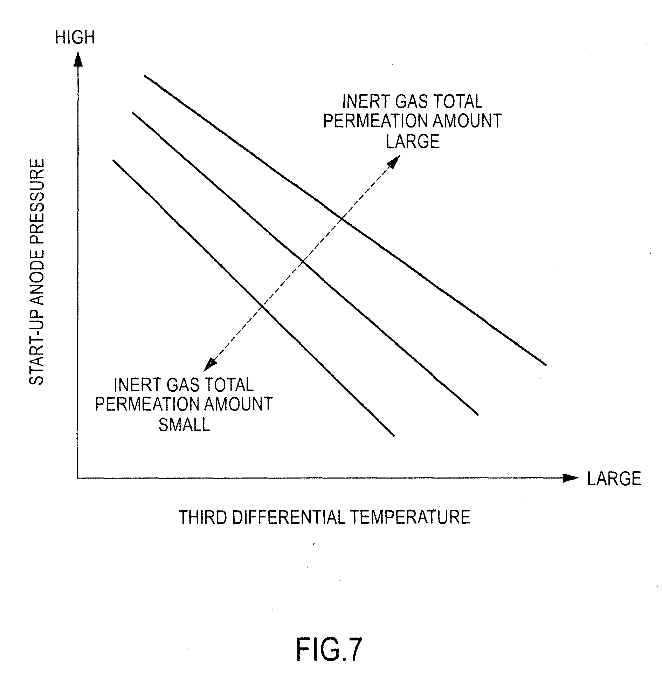

In Step S 15, the controller 4 sets the start-up anode pressure based on the third differential temperature and the inert gas total permeation amount Qidle with reference to a map of FIG. 7 to be described later.

In Step S 16, the controller 4 sets the idle stop flag f to 0.

FIG. 5 is a table for calculating the permeation coefficient of the inert gas based on the stack temperature. This permeation coefficient is a physical property value determined by the material and thickness of an electrolyte membrane.

As shown in FIG. 5, a permeation coefficient of inert gas generally increases with an increase in stack temperature.

FIG. 6 is a graph showing the method for estimating the second differential temperature (temperature difference between the buffer temperature after the elapse of the idle stop time and the outside air temperature).

The buffer temperature during the idle stop gradually decreases in accordance with heat radiation characteristics of the buffer tank 36. The heat radiation characteristics of the buffer tank 36 can be examined in advance by an experiment or the like. Thus, as shown in FIG. 6, how the buffer temperature decreases with the passage of time can be estimated from the heat radiation characteristics of the buffer tank 36 if the first differential temperature is known. This enables the estimation of the second differential temperature, i.e. the differential temperature between the buffer temperature and the outside air temperature when the idle stop time elapses.

FIG. 7 is a map for setting the start-up anode pressure based on the third differential temperature (temperature difference between the stack temperature and the buffer temperature after the elapse of the idle stop time) and the inert gas total permeation amount Qidle.

As shown in FIG. 7, the start-up anode pressure after the idle stop decreases with an increase in the third differential temperature, i.e. the temperature difference between the temperatures of the fuel cell stack 2 and the buffer tank 36 after the elapse of the idle stop time. Further, even if the third differential temperature is the same, the start-up anode pressure after the idle stop is set to increase with an increase in the inert gas total permeation amount Qidle.

According to the present embodiment described above, if there is a possibility of a temperature difference between the stack temperature and the buffer temperature at the start-up of the fuel cell system 1 such as when the idle stop control is executed, the start-up anode pressure is set according to the temperature difference between the stack temperature and the buffer temperature at the start-up (third differential temperature). Specifically, the start-up anode pressure is reduced with an increase in the temperature difference between the stack temperature and the buffer temperature (third differential temperature), i.e. with a decrease in the buffer temperature relative to the stack temperature.

As described above, the pressure of the buffer tank 36 after the same amount of the inert gas present in the anode gas flow passages 121 is fed under pressure to the buffer tank 36 is lower when the buffer temperature is lower than the stack temperature than when the stack temperature and the buffer temperature are equal.

Accordingly, if the start-up anode pressure is set according to the amount of the inert gas in the anode gas flow passages 121 before the start-up, ignoring the buffer temperature, when there is a temperature difference between the stack temperature and the buffer temperature, the anode gas is supplied more than necessary to feed the inert gas in the anode gas flow passages 121 under pressure to the buffer tank 36 and fuel economy is deteriorated.

Contrary to this, in the present embodiment, the start-up anode pressure is reduced with a decrease in the buffer temperature relative to the stack temperature. Thus, the supply of the anode gas more than necessary to feed the inert gas in the anode gas flow passages 121 under pressure to the buffer tank 36 can be suppressed. Therefore, the deterioration of fuel economy can be suppressed. Further, since a pressure input to the electrolyte membrane also decreases, the durability of the electrolyte membrane and, consequently, that of the fuel cell system can be improved.

Further, in the present embodiment, the start-up anode pressure is set, considering also the total amount of the inert gas permeating to the anode gas flow passages 121 (inert gas total permeation amount Qidle) while the fuel cell system 1 is stopped. Specifically, the start-up anode pressure is increased with an increase in the inert gas total permeation amount Qidle.

In this way, the inert gas in the anode gas flow passages 121 can be reliably fed under pressure to the buffer tank 36. That is, it can be suppressed that the inert gas present in the anode gas flow passages 121 of the fuel cell stack 2 before the start-up remains in the anode gas flow passages 121 without being fed under pressure to the buffer tank 36. Thus, a reduction in power generation efficiency at the start-up and the deterioration of the fuel cell stack 2 due to the shortage of the anode gas can be suppressed.

Further, in the present embodiment, the buffer temperature is estimated according to the stack temperature before the fuel cell system 1 is stopped, a stop time (idle stop time) until the fuel cell system 1 is started after being stopped, and the outside air temperature.

Since this enables the buffer temperature to be accurately detected and eliminates the need for a temperature sensor for detecting the buffer temperature, cost can be reduced.

### (Second Embodiment)

Next, a second embodiment of the present invention is described. The second embodiment of the present invention differs from the first embodiment in the buffer temperature estimation method. This point of difference is described below. It should be noted that, in each of the following embodiments, parts fulfilling functions similar to those of the first embodiment are denoted by the same reference signs and repeated description is omitted as appropriate.

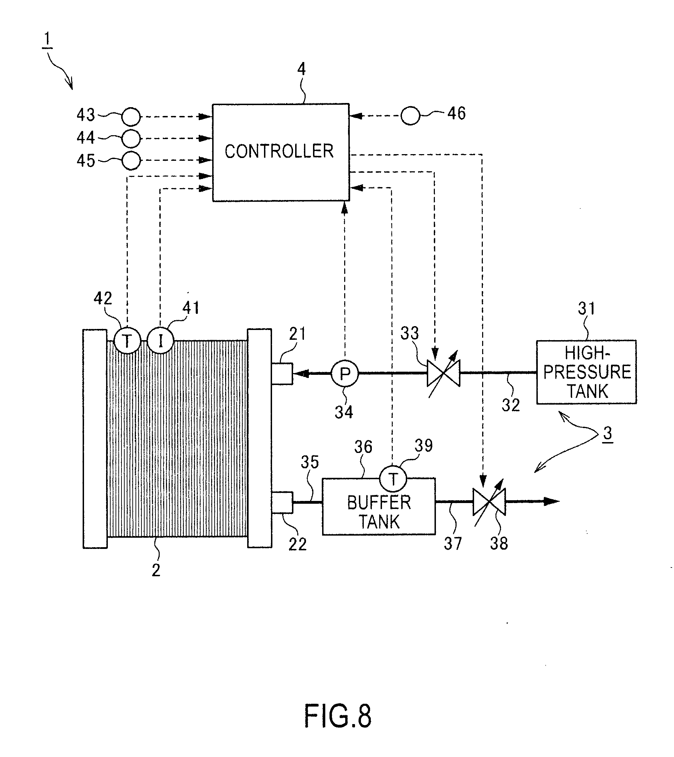

FIG. 8 is a schematic configuration diagram of an anode gas non-circulation type fuel cell system 1 according to a second embodiment of the present invention.

An anode gas supplying device 3 of the fuel cell system 1 according to the present embodiment includes a temperature sensor 39 for detecting the temperature of a buffer tank 36.

The temperature sensor 39 is mounted in the buffer tank 36 to detect the temperature of a part of a space in the buffer tank 36 or the temperature of a part of the outer wall of the buffer tank 36. The temperature of the buffer tank 36 detected by the temperature sensor 39 is referred to as a "detected buffer temperature" below.

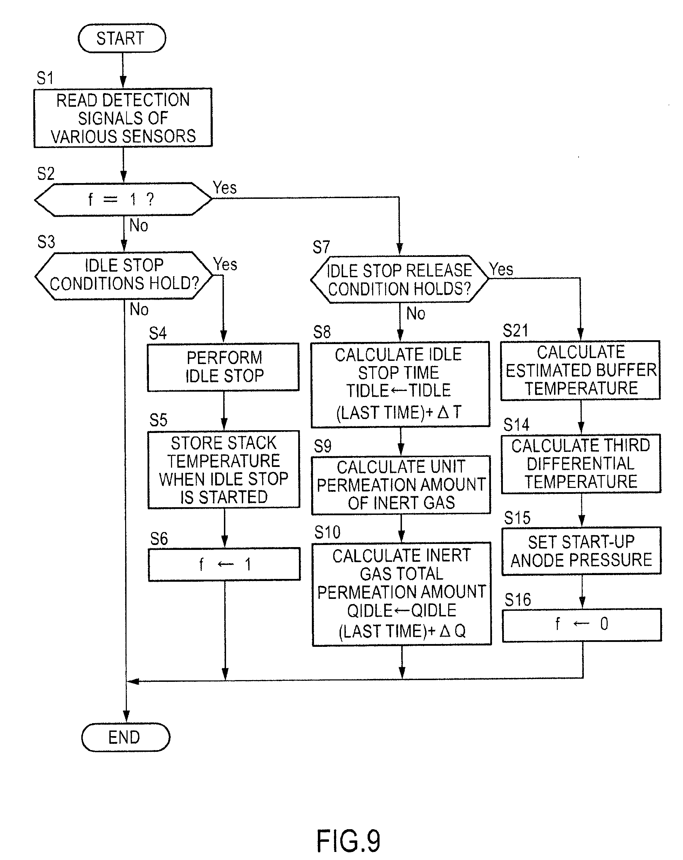

FIG. 9 is a flow chart showing a start-up control according to the present embodiment. A controller 4 performs this routine in a predetermined operation cycle (e.g. 10 [ms]) during the operation of the fuel cell system 1.

Since processings of Steps S1 to S10, S15 and S16 are the same as in the first embodiment, they are not described here.

In Step S21, the controller 4 calculates an average value of the detected buffer temperature and an outside air temperature detected by an outside air temperature sensor 45 and sets this average value as an estimated buffer temperature.

This is because of a possibility that there can be temperature unevenness in the buffer tank 36 and the detected buffer temperature does not necessarily indicate an accurate temperature in the buffer tank 36 since the buffer tank 36 has a large volume and radiates heat to outside air via the outer wall. Accordingly, in the present embodiment, the average value of the detected buffer temperature and the outside air temperature is set as the estimated buffer temperature. This enables the buffer temperature to be accurately estimated.

Although the embodiments of the present invention have been described above, the above embodiments are only an illustration of some application examples of the present invention and not intended to limit the technical scope of the present invention to the specific configurations of the above embodiments.

For example, in each of the above embodiments, the buffer tank 36 as a space for storing the anode off-gas is provided in the anode gas discharge passage 35.

Further, in each of the above embodiments, the start-up anode pressure is set according to the temperature difference between the stack temperature and the buffer temperature when the fuel cell system 1 is started after the idle stop. However, such setting of the start-up anode pressure may be made when there is a possibility of a temperature difference between the stack temperature and the buffer temperature when the fuel cell system 1 is started and is not limited to the start-up timing of the fuel cell system 1 after the idle stop.

This application claims priority based on Japanese Patent Application No. 2011-219753, filed with the Japan Patent Office on October 4, 2011.

## Claims

1. A fuel cell system (1) for generating power by supplying anode gas and cathode gas to a fuel cell (2), comprising:
a control valve (33) configured to control the pressure of the anode gas to be supplied to the fuel cell (2);
a buffer unit (36) configured to store anode off-gas discharged from the fuel cell (2); and
a start-up anode gas pressure control unit (4) configured to feed inert gas in an anode gas flow passage (121) of the fuel cell (2) under pressure to the buffer unit (36) by controlling the pressure of the anode gas to be supplied to the fuel cell (2) when the fuel cell system (1) is started;
the start-up anode gas pressure control unit (4) controls the pressure of the anode gas according to a temperature difference between the temperature of the fuel cell (2) and that of the buffer unit (36).

2. The fuel cell system (1) according to claim 1, wherein the start-up anode gas pressure control unit (4) reduces the pressure of the anode gas with a decrease in the temperature of the buffer unit (36) relative to the temperature of the fuel cell (2).

3. The fuel cell system (1) according to claim 2, wherein the start-up anode gas pressure control unit (4) increases the pressure of the anode gas with an increase in the amount of the inert gas in the anode gas flow passage (121) of the fuel cell (2) when the fuel cell system (1) is started.

4. The fuel cell system (1) according to any one of claims 1 to 3, comprising:
a buffer temperature estimation unit (4) configured to estimate the temperature of the buffer unit (36) according to the temperature of the fuel cell (2) before the fuel cell system (1) is stopped, a stop time until the fuel cell system (1) is restarted after being stopped and an outside air temperature.

5. The fuel cell system (1) according to any one of claims 1 to 3, comprising:
a temperature detection unit (39) configured to detect the temperature of a part of the buffer unit (36); and
a buffer temperature estimation unit (4) configured to estimate the temperature of the buffer unit (36) according to the temperature of the part of the buffer unit (36) and an outside air temperature.

## Patentansprüche

1. Brennstoffzellensystem (1) zum Erzeugen von Energie durch Zuführen von Anoden-Gas und Kathoden-Gas zu einer Brennstoffzelle (2), wobei es umfasst:
ein Steuerventil (33), das so eingerichtet ist, dass es den Druck des der Brennstoffzelle (2) zuzuführenden Anoden-Gases steuert;
eine Puffereinheit (36), die so eingerichtet ist, dass sie aus der Brennstoffzelle (2) abgeleitetes Anoden-Abgas speichert; und
eine Einheit (4) zum Steuern des Drucks von Anoden-Gas beim Starten, die so eingerichtet ist, dass sie inertes Gas in einem Anoden-Gas-Strömungskanal (121) der Brennstoffzelle (2) der Puffereinheit (36) unter Druck zuführt, indem sie den Druck des der Brennstoffzelle (2) beim Starten des Brennstoffzellensystems (1) zuzuführenden Anoden-Gases steuert;
wobei die Einheit (4) zum Steuern des Drucks von Anoden-Gas beim Starten den Druck des Anoden-Gases entsprechend einer Temperaturdifferenz zwischen der Temperatur der Brennstoffzelle (2) und der der Puffereinheit (36) steuert.

2. Brennstoffzellensystem (1) nach Anspruch 1, wobei die Einheit (4) zum Steuern des Drucks von Anoden-Gas beim Starten den Druck des Anoden-Gases mit einer Abnahme der Temperatur der Puffereinheit (36) relativ zu der Temperatur der Brennstoffzelle (2) reduziert.

3. Brennstoffzellensystem (1) nach Anspruch 2, wobei die Einheit (4) zum Steuern des Drucks von Anoden-Gas beim Starten den Druck des Anoden-Gases mit einer Zunahme der Menge des inerten Gases in dem Anoden-Gas-Strömungskanal (121) der Brennstoffzelle (2) beim Starten des Brennstoffzellensystems (1) erhöht.

4. Brennstoffzellensystem (1) nach einem der Ansprüche 1 bis 3, das umfasst:
eine Einheit (4) zum Schätzen einer Puffer-Temperatur, die so eingerichtet ist, dass sie die Temperatur der Puffereinheit (36) entsprechend der Temperatur der Brennstoffzelle (2) vor dem Stoppen des Brennstoffzellensystems (1), einer Stopp-Zeit bis zum erneuten Starten des Brennstoffzellensystems (1) nach dem Stoppen und einer Außen-Lufttemperatur schätzt.

5. Brennstoffzellensystem (1) nach einem der Ansprüche 1 bis 3, das umfasst:
eine Temperaturerfassungseinheit (39), die so eingerichtet ist, dass sie die Temperatur eines Teils der Puffereinheit (36) erfasst; und
eine Einheit (4) zum Schätzen einer Puffer-Temperatur, die so eingerichtet ist, dass sie die Temperatur der Puffereinheit (36) entsprechend der Temperatur des Teils der Puffereinheit (36) und einer Außen-Lufttemperatur schätzt.

## Revendications

1. Système de pile à combustible (1) permettant de générer de la puissance en fournissant un gaz d'anode et un gaz de cathode à une pile à combustible (2), comprenant :
une soupape de commande (33) configurée pour commander la pression du gaz d'anode à fournir à la pile à combustible (2),
une unité formant tampon (36) configurée pour stocker le gaz de dégagement anodique éjecté de la pile à combustible (2), et
une unité de commande de pression de gaz d'anode au démarrage (4) configurée pour injecter à l'unité formant tampon (36) un gaz inerte dans un passage de flux de gaz d'anode (121) de la pile à combustible (2) sous pression en commandant la pression du gaz d'anode à fournir à la pile à combustible (2) lorsque l'on fait démarrer le système de pile à combustible (1),
l'unité de commande de pression de gaz d'anode au démarrage (4) commande la pression du gaz d'anode en fonction d'une différence de température entre la température de la pile à combustible (2) et celle de l'unité formant tampon (36).

2. Système de pile à combustible (1) selon la revendication 1, dans lequel l'unité de commande de pression de gaz d'anode au démarrage (4) réduit la pression du gaz d'anode grâce à une diminution de la température de l'unité formant tampon (36) par rapport à la température de la pile à combustible (2).

3. Système de pile à combustible (1) selon la revendication 2, dans lequel l'unité de commande de pression de gaz d'anode au démarrage (4) augmente la pression du gaz d'anode avec une élévation de la température du gaz inerte dans le passage de flux de gaz d'anode (121) de la pile à combustible (2) lorsque l'on fait démarrer le système de pile à combustible (1).

4. Système de pile à combustible (1) selon l'une quelconque des revendications 1 à 3, comprenant :
une unité d'estimation de la température de tampon (4) configurée pour estimer la température de l'unité formant tampon (36) en fonction de la température de la pile à combustible (2) avant que le système de pile à combustible (1) soit arrêté, un certain temps d'arrêt jusqu'à ce que le système de pile à combustible (1) soit redémarré après avoir été arrêté, et en fonction de la température de l'air extérieur.

5. Système de pile à combustible (1) selon l'une quelconque des revendications 1 à 3, comprenant :
une unité de détection de température (4) configurée pour détecter la température d'une pièce de l'unité formant tampon (36), et
une unité d'estimation de la température de tampon (4) configurée pour évaluer la température de l'unité formant tampon (36) en fonction de la température de la pièce de l'unité formant tampon (36) et de la température de l'air extérieur.
